# EUROPÄISCHE PATENTSCHRIFT

(11) **EP 2 556 285 B1**
(45) Veröffentlichungstag und Bekanntmachung des Hinweises auf die Patenterteilung: **27.04.2016**
(21) Anmeldenummer: 11776809.3
(22) Anmeldetag: 02.11.2011
(51) Int. Cl.: F16P 3/08, F03D 1/00

(54) **TÜRVERRIEGELUNG**
DOOR LOCK
VERROUILLAGE DE PORTE

(30) Priorität: 04.11.2010 DE 102010043436
(43) Veröffentlichungstag der Anmeldung: 13.02.2013
(73) Patentinhaber: Wobben Properties GmbH, 26607 Aurich (DE)
(72) Erfinder: GEIKEN, Peter, 26721 Emden (DE)
(74) Vertreter: Eisenführ Speiser
(86) Internationale Anmeldenummer: PCT/EP2011/069242
(87) Internationale Veröffentlichungsnummer: WO 2012/059516

(56) Entgegenhaltungen:
- EP-A2- 1 371 845
- WO-A2-2010/102967
- DE-A1- 2 928 507
- KR-A- 20100 090 499
- US-A- 4 611 703
- US-B1- 7 431 567

## Beschreibung

Windenergieanlagen weisen regelmäßig einen Turm, ein Maschinenhaus, einen Generator und einen Rotor auf, wobei der Rotor die Rotorblätter der Windenergieanlage aufnimmt. Der Rotor ist dabei ein drehender Teil der Anlage und der Rotor weißt regelmäßig zusätzlich zu den Rotorblättern auch eine Nabe auf und ist mit dem Läufer bzw. dem drehenden Teil der Generators gekoppelt.

Solche Windenergieanlagen müssen auch regelmäßig einer Wartung unterzogen werden und dazu muss sich das Wartungspersonal in das Innere der Windenergieanlage begeben. Dies ist weitestgehend unproblematisch, soweit sich das Wartungspersonal noch in dem Teil der Windenergieanlage befindet, in dem sich die stehenden Teile der Windenergieanlage befindet, also z. B. im Turm oder auch im Maschinenhaus oberhalb des Turms, wo sich der Stator des Generators befindet und die entsprechenden Steuerungseinrichtungen sowie auch Schaltschränke, Gleichrichter und dergleichen.

Wenn das Wartungspersonal sich aber in den drehenden Teil der Windenergieanlage begeben muss, wird regelmäßig der drehende Teil der Windenergieanlage gebremst und/oder festgesetzt, sodass sich das Wartungspersonal in diesem Teil der Windenergieanlage begeben kann, um dort Wartungs- oder Servicearbeiten durchführen zu können.

Als Stand der Technik sei allgemein auf folgende Dokumente verwiesen: US 2010/0232978 A1, WO 2010102967 und KR 10 201000 90499.

Aufgabe der Erfindung ist es; die Wartungsarbeiten sicherer zu machen und Unfälle bei der Wartung der Windenergieanlage zu vermeiden.

Die Aufgabe wird erfindungsgemäß mit einer Vorrichtung mit den Merkmalen nach Anspruch 1 gelöst. Vorteilhafte Weiterbildungen sind in den Unteransprüchen beschrieben.

Erfindungsgemäß wird vorgeschlagen, dass zwischen dem drehenden und dem stehenden Teil der Windenergieanlage eine Tür bzw. ein Zugang angeordnet ist, welche bzw. welcher solange verschlossen und verriegelt ist, bis der drehende Teil der Windenergieanlage sicher festgesetzt ist. Der drehende Teil der Windenergieanlage muss also erst einmal sicher zum Stehen gebracht werden, bis überhaupt eine Entriegelung bzw. Öffnung der Tür möglich ist.

Damit wird auch sichergestellt, dass das Wartungs- und Servicepersonal, welche sich zu Wartungs- und Servicearbeiten in den Bereich mit den drehenden Teilen der Windenergieanlage begibt, diesen sicher erreichen kann und dort auch sicher seine Wartungs- und Servicearbeiten durchführen kann und nach Beendigung dieser Wartungs- und Servicearbeiten und nach Verschließen und Verriegeln der Tür können dann die Festsetzeinrichtungen wieder so in ihre Ausgangsposition verfahren werden, um den drehenden Teil der Windenergieanlage wieder freizugeben und den Betrieb der Windenergieanlage zu ermöglichen.

Die Erfindung ist nachfolgend anhand eines in der Zeichnung dargestellten Beispiels erläutert.

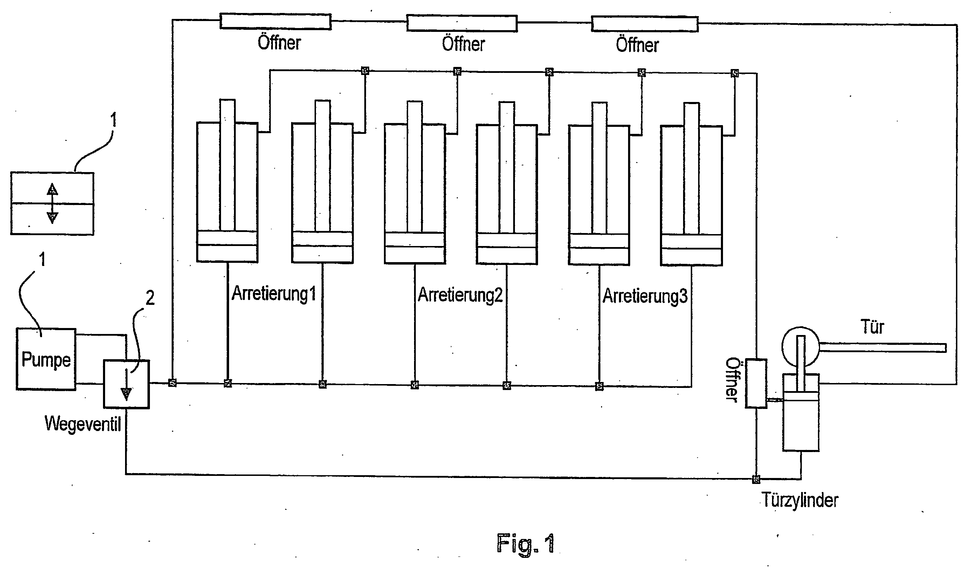

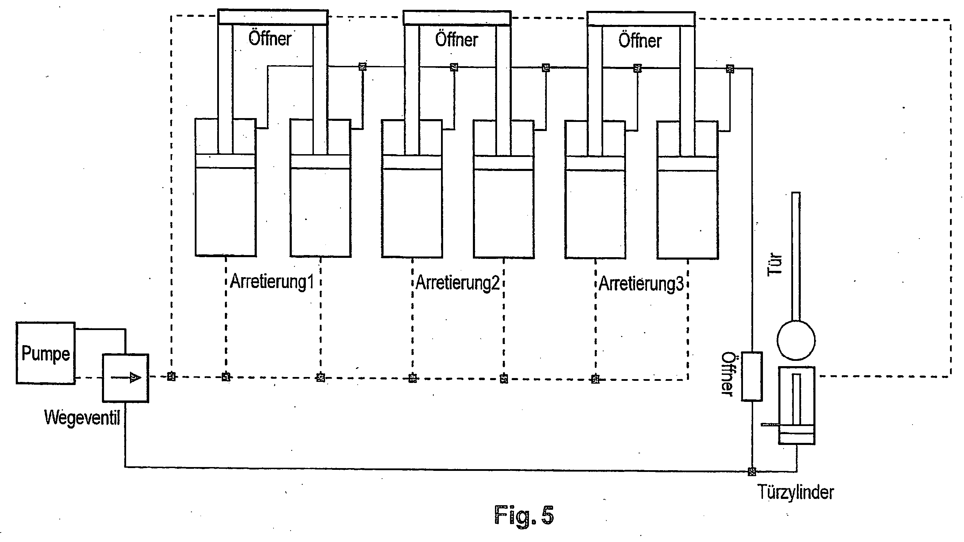

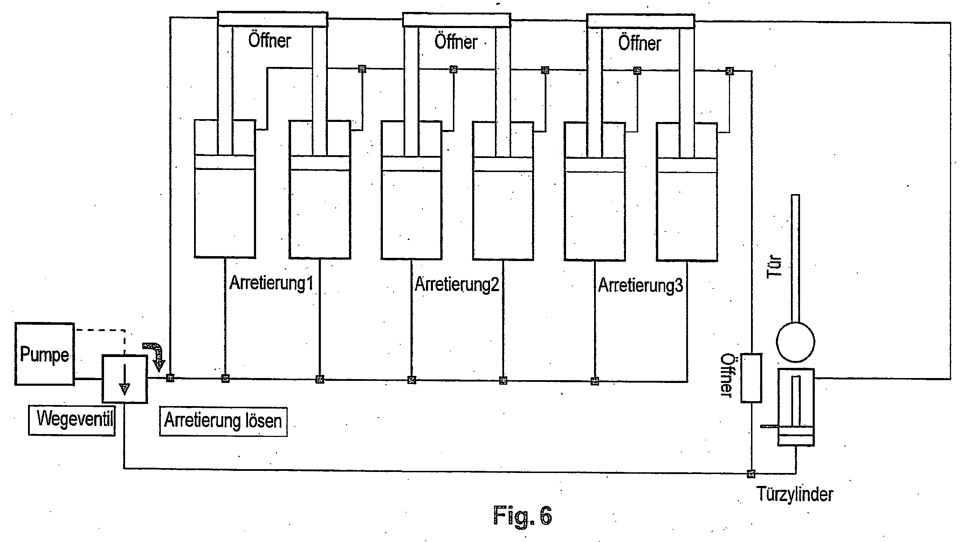

Die Figuren 1 bis 11 zeigen dabei ein hydraulisches System, welches einerseits die Festsetzeinrichtungen ebenso steuert, wie auch andererseits die Verriegelung für die Tür.

Das gesamte System könnte auch ohne weiteres elektrisch ausgeführt werden.

Der Aufbau der erfindungsgemäßen Vorrichtung in **Fig. 1** zeigt eine Pumpe 1, mittels welcher Hydraulikflüssigkeit, z. B. Öl oder dergleichen gepumpt werden kann. Die Pumpe kann maschinell angetrieben sein, es ist aber auch möglich, die Pumpe manuell anzutreiben, nämlich durch das Servicepersonal selbst. Der Pumpe nachgeordnet ist ein Wegeventil 2, welches in zwei Positionen verstellbar ist.

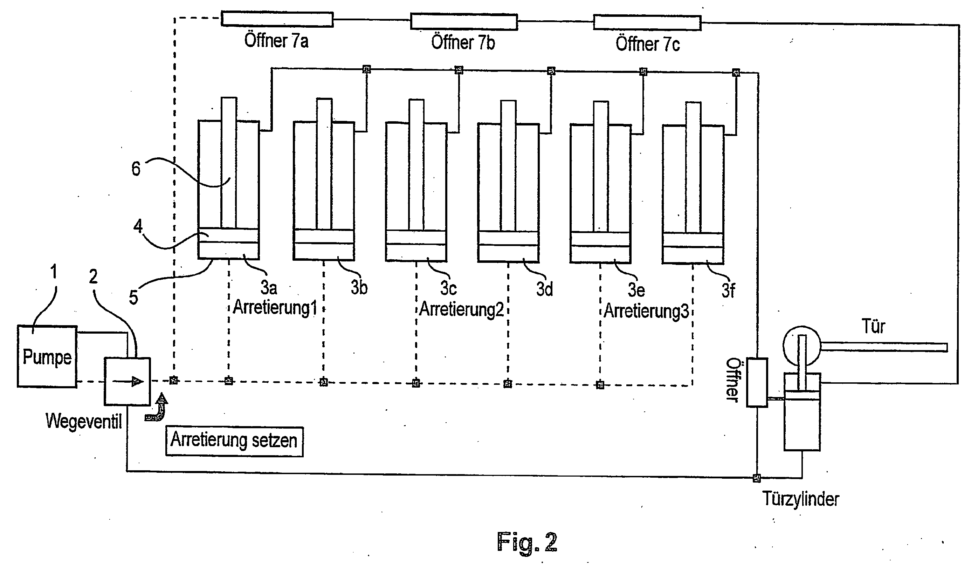

**Fig. 2** zeigt, wie das Wegeventil verstellt wird, um die Festsetzung, also die Arretierung des drehenden Teils der Windenergieanlage, zu setzen.

Die Arretierungseinrichtung besteht im dargestellten Beispiel aus sechs einzelnen Festsetzern 3a, b, c, d, e, f, wobei jeweils zwei Festsetzer ein Paar bilden. Die Festsetzer 3 selbst bestehen dabei aus Kolben 4, die innerhalb eines Zylinders 5 verfahrbar sind und bei denen eine Kolbenstange 6 letztlich das Teil ist, welches dann, wenn es in Arretierposition verfahren ist, mit einem Ventil 7 zusammenwirkt, welches solange verschlossen ist, solange der Kolben 4 noch nicht ganz ausgefahren ist und somit der Rotor der Windenergieanlage noch nicht sicher fixiert ist.

In der Zeichnung sind die Leitungen, in die die Hydraulikflüssigkeit von der Pumpe fließt, gestrichelt dargestellt, in diesen Leitungen herrscht u. U. ein leichter Überdruck, während In den Leitungen, die nicht gestrichelt dargestellt sind, ein geringerer Druck herrscht und durch die Hydraulikflüssigkeit zurück zur Pumpe fließt.

Die dargestellten Ventile 7a, 7b, 7c, (Öffner) sind dabei bevorzugt Steuerventile, also Ventile, die nur den Durchfluss von Hydraulikflüssigkeit In eine Richtung erlauben, wenn das Ventil sich in einen bestimmten Zustand befindet.

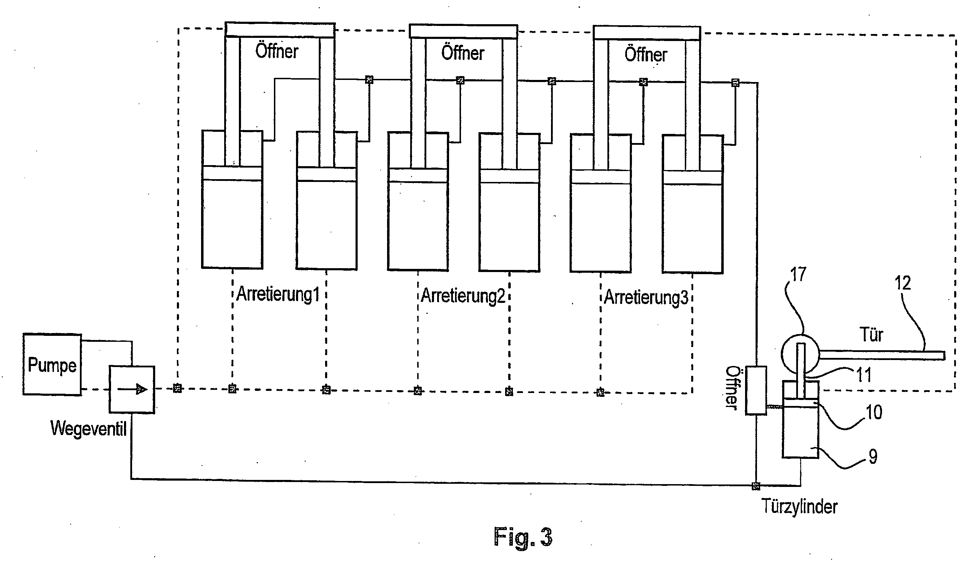

In Fig. 2 sind die Ventile noch geschlossen. In Fig. 2 ist zu erkennen, dass zunächst die Hydraulikflüssigkeit in den Teil 8 der Zylinder 5 eindringt, dessen Volumen durch die Kolben 4 der Arretierungseinrichtung bestimmt wird. Durch hineinpumpen von Hydraulikflüssigkeit in diesem Teil 8 der Zylinder 5 werden die Kolben 4 verschoben und somit werden auch die Kolbenstangen 6 vorgeschoben und zwar bis - siehe Fig. 3 - der Kolbenstangen die Ventile 7 schalten bzw. öffnen, sodass, da die Kolben 4 nicht mehr weiter vorrücken können, Hydraulikflüssigkeit durch die Ventile 7 fließen kann bis zu einem weiteren Zylinder 9, welcher ebenfalls einen Kolben 10 mit Kolbenstange 11 aufnimmt und durch welche eine Tür 12 fest verriegelt und nicht zu öffnen ist, in den die Kolbenstange 11 einen Teil der Tür, z. B. ein Drehgelenk 17 durchsetzt.

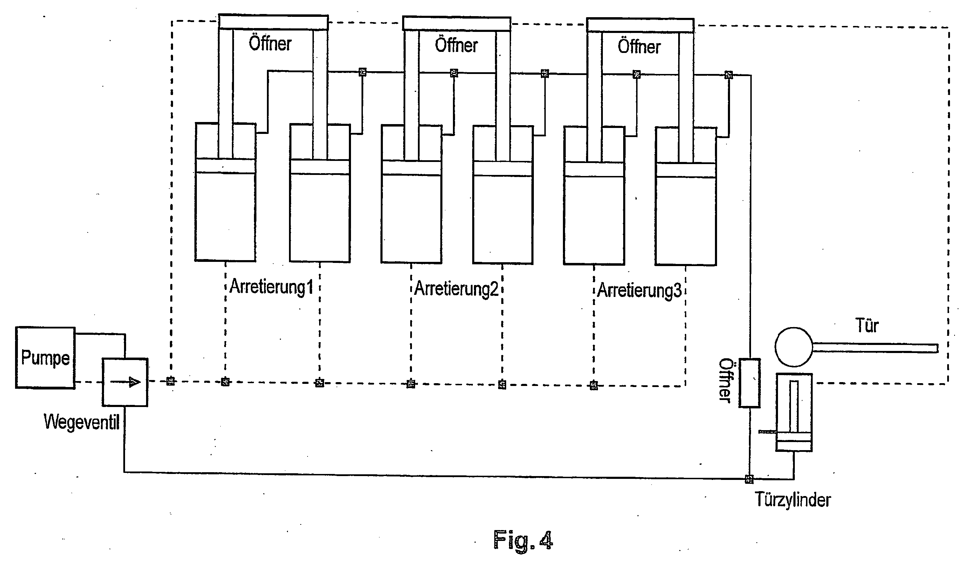

Nunmehr dringt Hydraulikflüssigkeit in den Teil des Zylinders, verdrängt dabei den Kolben nebst Kolbenstange (in der Zeichnung nach unten) zurück und gibt somit die Verriegelung der Tür frei **(****Fig. 4****)**.

In **Fig. 5** ist dargestellt wie die Tür 12 geöffnet ist und somit kann das Servicepersonal vom stehenden Teil der Windenergieanlage in den vorderen Teil, der der eigentlich drehende Teil der Windenergieanlage ist, der nun aber sicher festgesetzt ist, gelangen und dort Servicearbeiten ausführen.

**Fig. 6** zeigt nun die Vorbereitung zur Verriegelung der Tür.

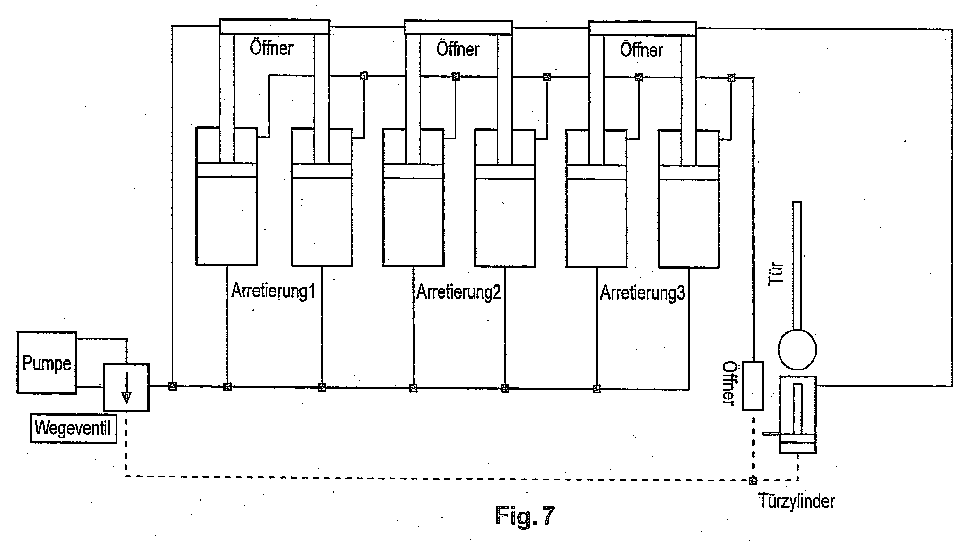

Hierzu wird zunächst einmal das Wegeventil 2 verschwenkt, sodass dann, wenn wieder gepumpt wird, der Kolben in dem Zylinder für die Tür in Richtung seiner Verriegelungsposition verfahren wird. Solange dabei jedoch die Tür noch geöffnet ist - siehe **Fig. 7** - ist ein vollständiges Vorfahren des Kolbens jedoch nicht möglich. Wie in den Figuren auch zu sehen, ist der Verriegelungsmechanismus der Tür ebenfalls ein Ventil 13 (Öffner) zugeordnet, welches jedoch verschlossen ist, solange der Kolben nicht seine vorbestimmte Position eingenommen hat, nämlich in eine Verriegelungsstellung verfahren ist.

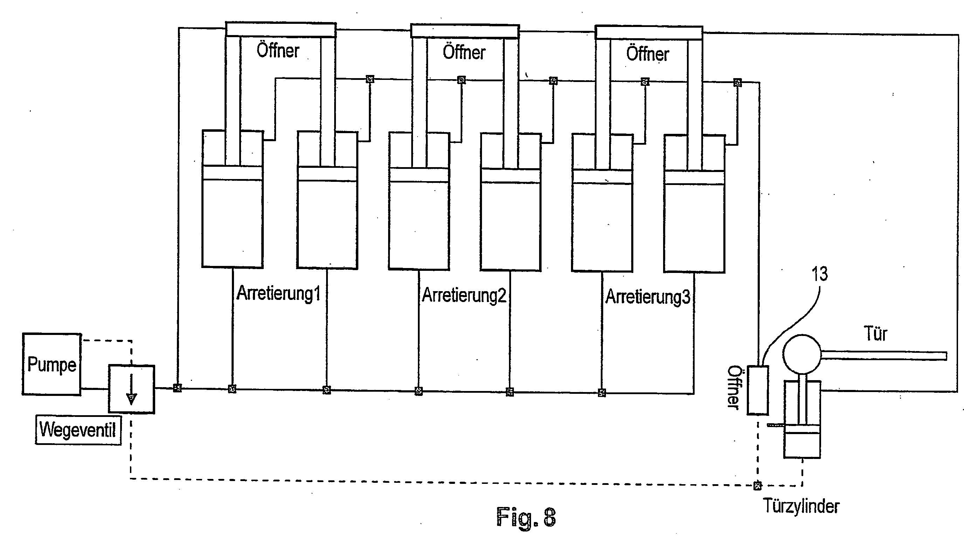

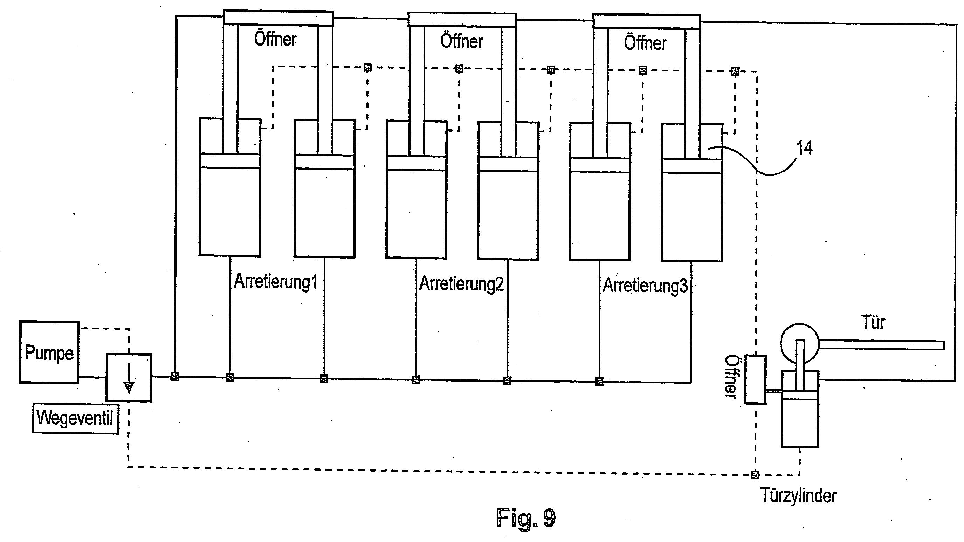

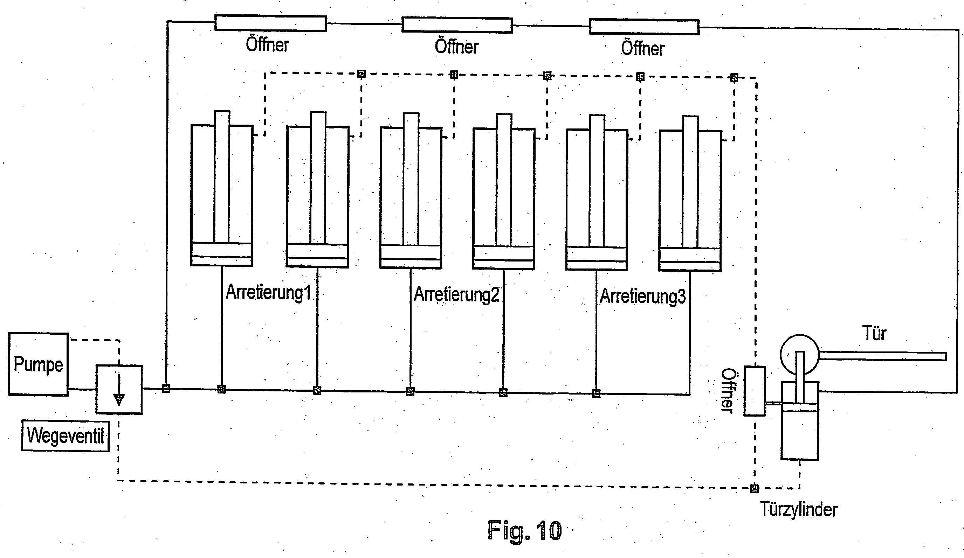

Wird nun die Tür verschlossen - siehe **Fig. 8** - kann der Kolben den entsprechenden Druck von Hydraulikflüssigkeit (der Druck wird durch die Pumpe aufgebracht) weiter nach vorne verfahren und die Tür mittels Durchdringung des Drehgelenks 17 verriegeln - siehe **Fig. 9** -. Hat der Kolben 10 im Zylinder 9 dann eine bestimmte Position z. B. Endposition erreicht, wird das der Türverriegelung zugeordnete Ventil 13 geöffnet und nunmehr kann Hydraulikflüssigkeit in die Räume 14 der Zylinder 5 der Arretierungen 3 gelangen und dabei die Kolben 4 zurückdrängen - siehe **Fig. 10** - sodass die Ventile 7 (Öffner) wieder verschlossen werden.

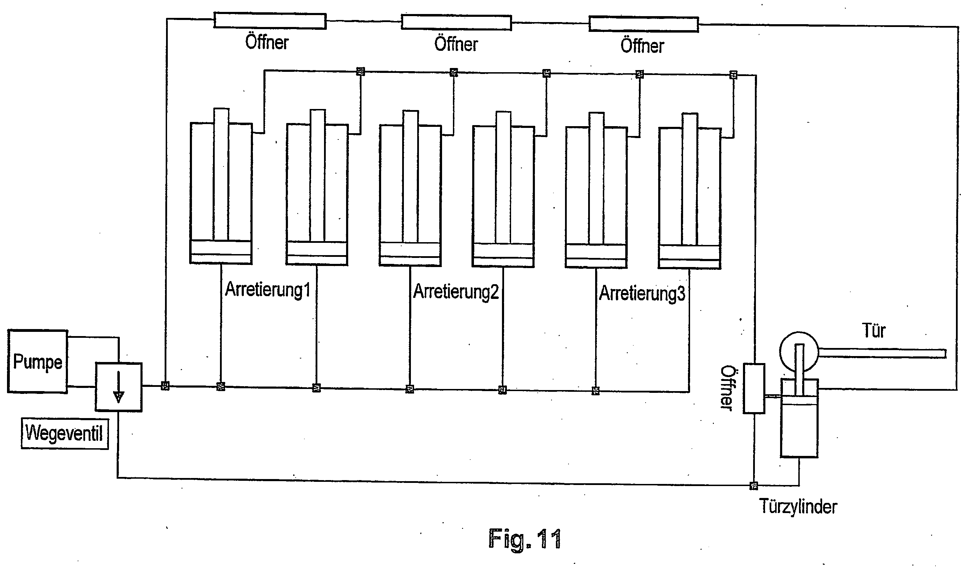

**Fig. 11** zeigt, dass das System seine Ausgangsposition wieder eingenommen hat. Nunmehr ist also der drehende Teil der Windenergieanlage frelgegeben, der Rotor kann rotieren und die Windenergieanlage kann in Betrieb genommen werden und gleichzeitig ist die Tür zwischen dem stehenden und dem drehenden Teil sicher und vor allem mechanisch verriegelt und kann nicht geöffnet werden, sodass Menschen nicht in den drehenden Teil der Windenergieanlage gelangen können.

Es ist auch möglich, die dargestellte Ausführungsförm für die Türverriegelung elektromechanisch oder rein elektrisch zu realisieren. So ist es z. B. auch möglich, die Arretierung zum Festsetzen des drehenden Teils durch einen Elektromotor oder Solenoid zu realisieren, sodass dann, wenn die Festsetzbolzen, die durch den Elektromotor vorgetrieben werden, ihre Festsetzposition erreicht haben, ein elektromechanischer Verschluss, mit elektrischer Energie versorgt und die Tür freigegeben wird.

Der Vorteil des hydraulischen Systems besteht darin, dass die Pumpe auch handangetrieben werden kann und somit sowohl das Festsetzen des drehenden Teils als auch das Öffnen der Tür manuell hergestellt werden kann. Das bedeutet also auch, dass für den Fall, dass die Netzspannung ausgefallen ist und somit keine elektrische Energie mehr zur Verfügung steht, der manuelle Antrieb (Handantrieb) zum Öffnen aber auch zum Schließen der Tür immer noch gegeben ist.

Die Tür zwischen dem drehenden und dem stehenden Teil der Windenergieanlage kann eine Öffnung (ein sogenanntes Mannloch) verschließen, welche dadurch gebildet wird, in dem eine Öffnung (z. B. 50-70 cm Durchmesser) des Stators mit einer entsprechenden Öffnung des Rotors des Generators in fluchtende Übereinstimmung gebracht werden.

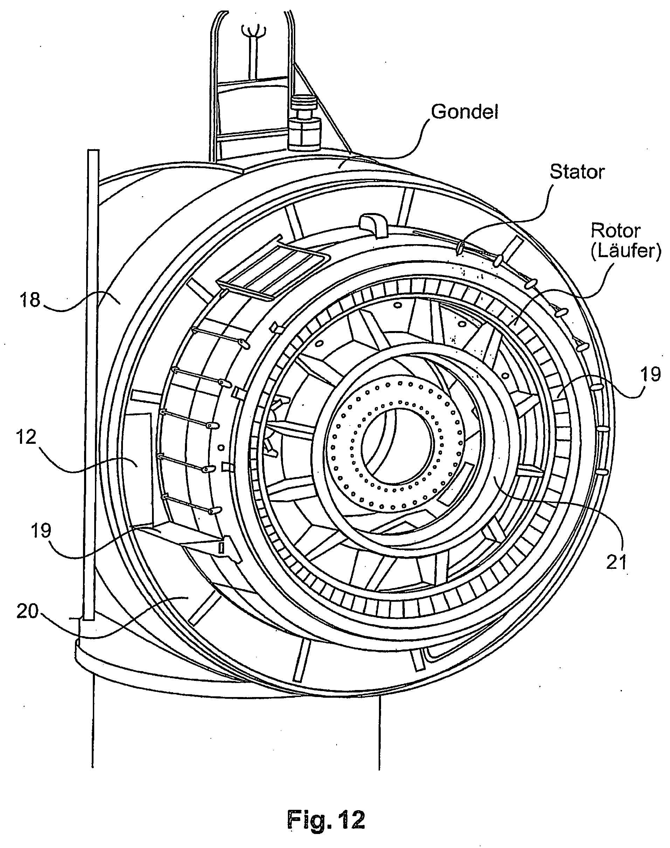

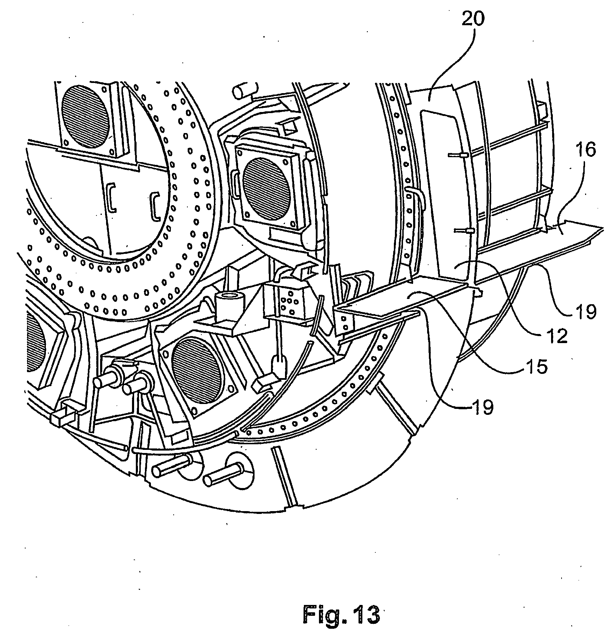

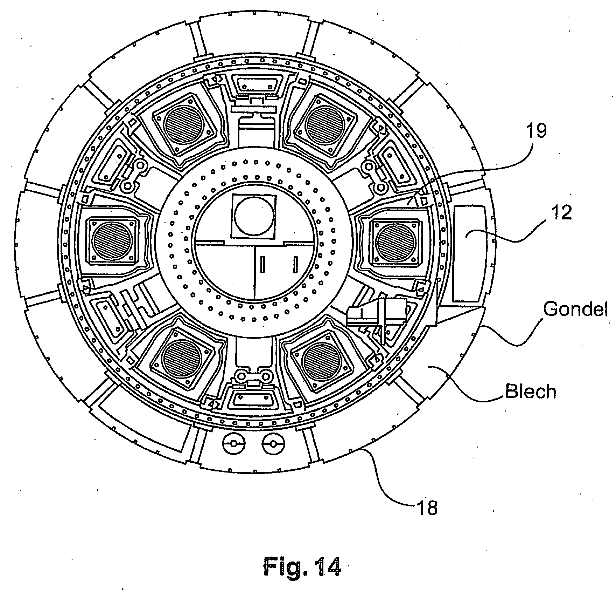

Besonders Vorteilhaft ist aber auch - und dies ist ein erfinderischer Aspekt der auch ganz unabhängig von den bisherigen Ausführungen ist - wenn die Tür (oder der Zugang) sich innerhalb der Gondelverkleidung 18 der Windenergieanlage aber neben dem Generator befindet, wie dies in **Fig. 12 bis 14** angedeutet ist. Zur besseren Veranschauung ist dabei die Gondelverkleidung im vorderen Teil weggelassen. In dem dargestellten Bild befindet sich unterhalb der Tür ein Podest 19, welches vom Wartungspersonal begangen werden kann. Die Tür selbst ist innerhalb einer Wand 20, z. B. aus Blech eingelassen. Im dargestellten Beispiel ist der Teil 15 der Teil, welcher noch dem stehenden Teil des Maschinenhauses bzw. der Gondel der Windenergieanlage zugeordnet ist und wenn das Wartungspersonal die Tür 12 öffnet und in den Teil 16 gelangt, befindet es sich in dem Teil, in dem sich auch die drehenden Teile der Windenergieanlage befinden, also Rotor, Nabe sowie Läufer 21 des Generators etc. Der Vorteil der Ausführung nach Fig. 12 bis 14 besteht besonders darin, dass der Zutritt von dem stehenden in den drehenden Teil der Windenergieanlage sehr einfach ausgestaltet ist und nicht mehr Wartungspersonal mühsam zunächst einmal eine Öffnung des drehenden Teils des Generators in fluchtender Übereinstimmung mit dem stehenden Teil bringen und sich dort durchzwängen muss.

Vor allem ist die Tür 12 auch vom Wartungspersonal aufrecht durchtretbar und es können Werkzeuge und dergleichen leichter mit in den vorderen als drehenden Teil der Windenergieanlage transportiert werden. Der drehende Teil der Windenergieanlage wird auch Spinner genannt und ist wie die gesamte Gondel eingehaust.

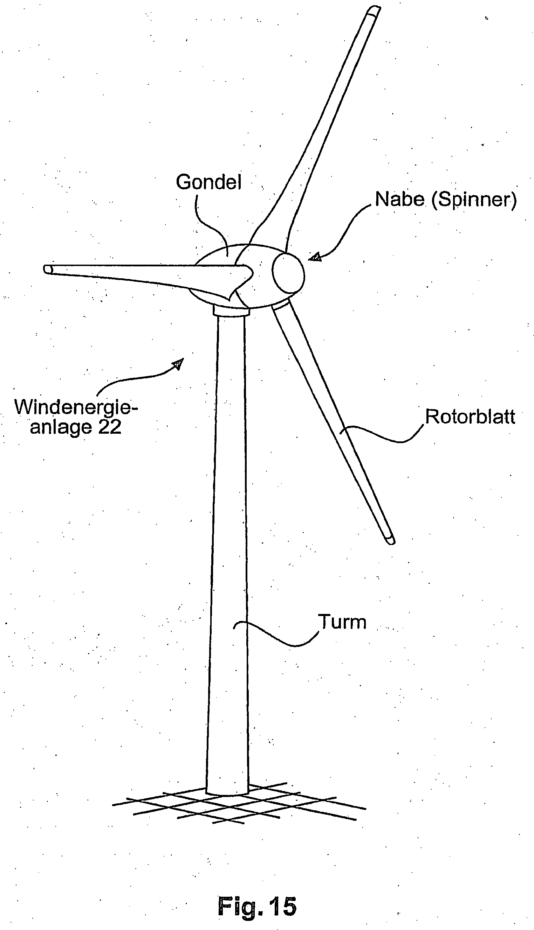

**Fig. 15** zeigt eine Ansicht einer Windenergieanlage 22.

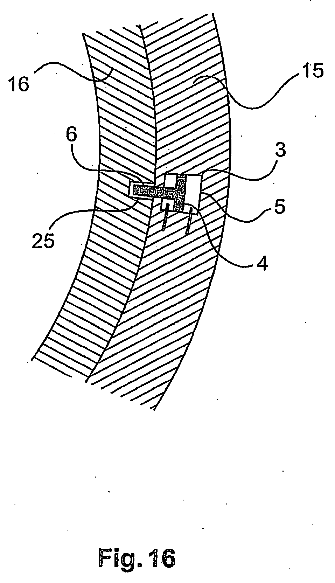

**Fig. 16** zeigt in prinzipieller Darstellung den drehenden Teil 16 und den stehenden Teil 15 einer Windenergieanlage. Wie erwähnt ist der drehende Teil einer Windenergieanlage in Bezug auf den Generator der Läufer bzw. Rotor und der stehende Teil 15 ist der Stator. Wie dargestellt ist die Verriegelungseinrichtung in dem stehenden Teil der Windenergieanlage ausgebildet und die Kolbenstange 6 des Kolbens 4 des Zylinders 5 kann dabei hydraulisch in eine Bohrung 25 des drehenden Teils vorgeschoben werden, sodass dann der drehende Teil festgesetzt ist.

Die hydraulischen Leitungen der Figuren 1 bis 11, wie auch die Pumpe des Wegeventils, wie auch alle Ventile, die Tür und der Verriegelungsmechanismus und die Arretierungen sind auf dem stehenden Teil der Windenergieanlage angeordnet.

Die Pumpe kann man sich in einem vereinfachten Beispiel als Kolbenpumpe vorstellen. Der Kolben trennt dabei die Pumpe in zwei Bereiche auf und wenn beispielsweise der Kolben - siehe Fig. 1 - der Pumpe 1 sich nach unten bewegt (↓) die Hydraulikflüssigkeit durch den unteren Ausgang (in Fig. 2 gestrichelt dargestellt) der Pumpe gedrückt während gleichzeitig aus dem System zurückfließende Hydraulikflüssigkeit in den oberen Bereich der Pumpe durch den oberen Eingang (in Fig. 2 die durchgezogene Linie) fließen kann.

Anders verhält es sich, wenn die Bewegungsrichtung des Kolbens umgedreht wird (↑).

## Patentansprüche

1. Windenergieanlage mit einem stehenden Teil und einem drehenden Teil, wobei es zwischen dem stehenden Teil (15) und dem drehenden Teil (16) der Windenergieanlage (22) eine Tür angeordnet ist, **dadurch gekennzeichnet, dass**
die Windenergieanlage eine Vorrichtung zur Steuerung der Verriegelung der Tür aufweist, wobei Mittel (3) zur Fixierung bzw. Arretierung des drehenden Teils (16) ausgebildet sind und die Tür (12) zwischen dem drehenden (16) und dem stehenden (15) Teil der Windenergieanlage eine Verriegelung (11, 17) aufweist, welche eine Entriegelung und gegebenenfalls dann eine Öffnung der Tür (12) ermöglicht, wenn die Mittel (3) zur Fixierung bzw. Arretierung den drehenden Teil (16) der Windenergieanlage festgesetzt bzw. fixiert haben.

2. Windenergieanlage nach Anspruch 1,
**dadurch gekennzeichnet, dass** die Mittel (3) zur Arretierung an dem stehenden Teil (15) der Windenergieanlage angeordnet sind und im Wesentlichen aus einen Bolzen, einer Stange (6) oder dergleichen bestehen, die um eine vorbestimmte Wegstrecke verschiebbar ist, um mit Öffnungen, Nuten, Bohrungen (25) oder dergleichen, die auf den drehenden Teil der Windenergieanlage angeordnet sind, im Eingriff zu kommen, um damit den drehenden Teil der Windenergieanlage mechanisch festzusetzen.

3. Windenergieanlage nach Anspruch 2,
**dadurch gekennzeichnet, dass** ein hydraulisches System ausgebildet ist, um die Mittel (3) zur Arretierung anzutreiben und dass dann, wenn die Mittel (3) zur Arretierung eine vorbestimmte Position eingenommen haben, ein Ventil (7) oder eine Schalteinrichtung, mit welcher die Mittel (3) zur Arretierung zusammenarbeiten, geöffnet wird, um Hydraulikflüssigkeit, welche sich in dem Hydrauliksystem befindet, zu der Verriegelungseinrichtung (11, 17) führt, um die Tür (12) zu entriegeln.

4. Windenergieanlage nach einem der vorhergehenden Ansprüche,
**dadurch gekennzeichnet, dass** der Verriegelungsmechanismus (11, 17) für die Tür mit einem Ventil (13) gekoppelt ist, welches geschlossen ist, solange die Tür (12) entriegelt ist, und welches geöffnet wird, wenn die Verriegelung (11, 17) für die Tür (12) eine vorbestimmte Position eingenommen hat und dass nach Öffnung des Ventils (13) die Festsetzeinrichtung (3) für den drehenden Teil (16) der Windenergieanlage (22) in ihre Ausgangsposition zurückgefahren wird, um die Festsetzung des drehenden Teils (16) aufzuheben.

5. Verfahren zum Steuern der Tür (12) zwischen einem stehenden (15) und einem drehenden (16) Teil einer Windenergieanlage (22) nach einem der vorhergehenden Ansprüche,
wobei die Tür (12) einen Verriegelungsmechanismus (11, 17) aufweist, welcher die Öffnung der Tür (12) erst dann freigibt, wenn der drehende Teil festgesetzt ist.

6. Verfahren nach Anspruch 5,
**dadurch gekennzeichnet, dass** eine Loslösung der Festsetzung erst dann ermöglicht wird, wenn die Tür (12) geschlossen und verriegelt ist.

7. Windenergieanlage nach einem der Ansprüche 1 bis 4 mit einem Turm und einer Gondel, die im Wesentlichen das Maschinenhaus der Windenergieanlage (22) aufnimmt, wobei die Gondel einerseits den stehenden (15) Teil als auch den drehenden (16) Teil der Windenergieanlage aufnimmt, und
wobei vom stehenden Teil der Windenergieanlage her der stehende Teil des Generators zugänglich ist und der drehende Teil der Windenergieanlage im Wesentlichen durch den aerodynamischen Rotor eine Nabe und einen Läufer des Generators gebildet werden, und
wobei eine Tür als Zugang vom stehenden (15) Teil der Gondel der Windenergieanlage (22) in den drehenden (16) Teil ausgebildet ist und die Tür (12) und oder der Zugang sich innerhalb der Gondel aber seitlich beabstandet neben dem Generator befindet.

## Claims

1. Wind turbine having a fixed portion and a rotating portion, wherein a door is arranged between the fixed portion (15) and the rotating portion (16) of the wind turbine (22), **characterised in that**
the wind turbine has a device for controlling the locking of the door, wherein means (3) for fixing or securing the rotating portion (16) are constructed and the door (12) has between the rotating portion (16) and the fixed portion (15) of the wind turbine a lock (11, 17), which enables unlocking and where applicable then opening of the door (12) when the means (3) for fixing or securing have secured or fixed the rotating portion (16) of the wind turbine.

2. Wind turbine according to claim 1,
**characterised in that** the means (3) for securing are arranged on the fixed portion (15) of the wind turbine and substantially comprise a pin, a rod (6) or the like which can be displaced by a predetermined travel path in order to move into engagement with openings, grooves, holes (25) or the like, which are arranged on the rotating portion of the wind turbine, in order to mechanically secure the rotating portion of the wind turbine as a result.

3. Wind turbine according to claim 2,
**characterised in that** a hydraulic system is constructed in order to drive the means (3) for securing, and **in that**, when the means (3) for securing have assumed a predetermined position, a valve (7) or a switching device with which the means (3) for securing cooperate, is opened in order to guide hydraulic fluid which is located in the hydraulic system to the locking device (11, 17) in order to unlock the door (12).

4. Wind turbine according to any one of the preceding claims, **characterised in that** the locking mechanism (11, 17) for the door is coupled to a valve (13) which is closed as long as the door (12) is unlocked and which is open when the lock (11, 17) for the door (12) has assumed a predetermined position, and **in that**, after opening the valve (13), the securing device (3) for the rotating portion (16) of the wind turbine (22) is moved back into the initial position thereof in order to cancel the securing of the rotating portion (16).

5. Method for controlling the door (12) between a fixed portion (15) and a rotating portion (16) of a wind turbine (22) according to any one of the preceding claims,
wherein the door (12) has a locking mechanism (11, 17) which releases the opening of the door (12) only when the rotating portion is secured.

6. Method according to claim 5,
**characterised in that** a release of the securing is enabled only when the door (12) is closed and locked.

7. Wind turbine according to any one of claims 1 to 4, having a tower and a pod which substantially receives the machine housing of the wind turbine (22), wherein the pod on the one hand receives the fixed portion (15) and the rotating portion (16) of the wind turbine, and
wherein the fixed portion of the generator is accessible from the fixed portion of the wind turbine, and the rotating portion of the wind turbine is formed substantially by the aerodynamic rotor, a hub and an armature of the generator, and
wherein a door is constructed as an access from the fixed portion (15) of the pod of the wind turbine (22) to the rotating portion (16), and the door (12) and/or the access is/are located inside the pod but laterally spaced apart beside the generator.

## Revendications

1. Eolienne comprenant une partie stationnaire et une partie rotative, sachant qu'une porte est disposée entre la partie stationnaire (15) et la partie rotative (16) de l'éolienne (22),
**caractérisée en ce que** l'éolienne présente un dispositif servant à commander le verrouillage de la porte, sachant que des moyens (3) sont réalisés afin de fixer ou de bloquer la partie rotative (16) et que la porte (12) présente, entre la partie rotative (16) et la partie stationnaire (15) de l'éolienne, un verrouillage (11, 17), qui permet un déverrouillage, et le cas échéant alors, une ouverture de la porte (12) lorsque les moyens (3) de fixation ou de blocage ont immobilisé ou fixé la partie rotative (16) de l'éolienne.

2. Eolienne selon la revendication 1,
**caractérisée en ce que** les moyens (3) de blocage sont disposés au niveau de la partie stationnaire (15) de l'éolienne et sont constitués essentiellement d'un boulon, d'une tige (6) ou similaire, laquelle peut être déplacée par coulissement selon un trajet d'une course prédéfinie afin de venir en prise avec des ouvertures, des rainures, des alésages (25) ou similaires, qui sont disposés sur la partie rotative de l'éolienne, afin ce faisant d'immobiliser mécaniquement la partie rotative de l'éolienne.

3. Eolienne selon la revendication 2,
**caractérisée en ce qu'**un système hydraulique est réalisé afin d'entraîner les moyens (3) de blocage, et **en ce que**, lorsque les moyens (3) de blocage ont adopté une position prédéfinie, une soupape (7) ou un dispositif de commutation, avec lequel les moyens (3) de blocage coopèrent, est ouvert(e) afin de déverrouiller autour de la porte (12) du liquide hydraulique, qui se trouve dans le système hydraulique, qui mène au dispositif de verrouillage (11, 17).

4. Eolienne selon l'une quelconque des revendications précédentes,
**caractérisée en ce que** le mécanisme de verrouillage (11, 17) pour la porte est couplé à la soupape (13) qui est fermée tant que la porte (12) est déverrouillée, et qui est ouverte lorsque le verrouillage (11, 17) pour la porte (12) a adopté une position prédéfinie, et **en ce que**, après l'ouverture de la soupape (13), le dispositif d'immobilisation (3) pour la partie rotative (16) de l'éolienne (22) est ramené dans sa position de départ afin d'annuler l'immobilisation de la partie rotative (16).

5. Procédé servant à commander la porte (12) entre une partie stationnaire (15) et une partie rotative (16) d'une éolienne (22) selon l'une quelconque des revendications précédentes,
sachant que la porte (12) présente un mécanisme de verrouillage (11, 17), qui débloque l'ouverture de la porte (12) seulement lorsque la partie rotative est immobilisée.

6. Procédé selon la revendication 5,
**caractérisé en ce qu'**un desserrement de l'immobilisation est alors rendu possible seulement lorsque la porte (12) est fermée et verrouillée.

7. Eolienne selon l'une quelconque des revendications 1 à 4, comprenant une tour et une nacelle, qui reçoit essentiellement la salle des machines de l'éolienne (22), sachant que la nacelle reçoit d'une part la partie stationnaire (15) mais également la partie en rotation (16) de l'éolienne, et
sachant que la partie stationnaire du générateur est accessible depuis la partie stationnaire de l'éolienne et que la partie rotative de l'éolienne est formée essentiellement par le rotor aérodynamique, par un moyeu et par un induit du générateur, et
sachant qu'une porte est réalisée sous la forme d'un accès depuis la partie stationnaire (15) de la nacelle de l'éolienne (22) dans la partie rotative (16) et que la porte (12) ou l'accès se trouve à l'intérieur de la nacelle toutefois à distance sur le côté à côté du générateur.
